# EUROPEAN PATENT SPECIFICATION

(11) **EP 1 855 206 B1**
(45) Date of publication and mention of the grant of the patent: **03.04.2013**
(21) Application number: 06113650.3
(22) Date of filing: 08.05.2006
(51) Int. Cl.: G06F 12/08, G06Q 10/00

(54) **Sharing memory resources of wireless portable electronic devices**
Gemeinsamer Zugriff auf Speicherressourcen mehrerer drahtloser, tragbarer, elektronischer Geräte
Ressources de mémoire partagées des dispositifs électroniques portables sans fil

(43) Date of publication of application: 14.11.2007
(73) Proprietor: Research In Motion Limited, Waterloo, ON N2L 3W8 (CA)
(72) Inventor: Adams, Neil, Waterloo Ontario N2K 4E4 (CA)
(74) Representative: Moore, Barry

(56) References cited:
- EP-A- 1 316 888
- WO-A-00/48384
- WO-A-2004/012352
- US-A1- 2003 183 691
- MICHALAKIS N ET AL: "Designing an NFS-based mobile distributed file system for ephemeral sharing in proximity networks" APPLICATIONS AND SERVICES IN WIRELESS NETWORKS, 2004. ASWN 2004. 2004 4TH WORKSHOP ON BOSTON, MA, USA 9-11 AUG. 2004, PISCATAWAY, NJ, USA,IEEE, 9 August 2004 (2004-08-09), pages 225-231, XP010802374 ISBN: 0-7803-8960-3

## Description

Limited memory resources pose a challenge with some portable electronic devices. Applications installed on a portable electronic device are stored in the device's memory, as are user data items that are used by the applications and system data used by the applications and the operating system of the device. For example, a device having several different applications will store in its memory contact information, e-mail messages, tasks, calendar entries, instant messages, audio files, image files and other forms of user data items.

In order not to waste the limited memory resources, data may be arranged and stored in an efficient manner, and techniques such as compression may be used. A user may also be able to add additional memory to the device, or to replace the existing memory of the device with memory having greater storage capacity. There are also portable memory units that can provide additional storage for the device. For example, if the portable electronic device has a universal serial bus (USB) port and supports the ability to transfer data to an external storage unit, a USB flash drive may be connected to the portable electronic device and the user may transfer data from the device to the drive. In another example, if the portable electronic device is a Bluetooth® (BT) device and supports the ability to transfer data to an external storage unit, then the user may select certain data and transfer the selected data from the device to a dedicated BT hard disk drive.

At some point in time the memory of a portable electronic device may have insufficient capacity to store data in addition to whatever is currently stored therein, or the unused storage capacity of the memory may have fallen below a predetermined threshold. The user of the device may then be prompted to erase some user data items in order to increase the unused storage capacity of the memory. The device may have a memory manager that automatically erases some of the user data items when activated.

EP 1316888 discloses a memory device for use by an electronic appliance has a first data port, a second data port, a data storage portion, and a data allocation device. The first data port is operatively connectable to the electronic appliance. The second data port is operatively connectable to a remote memory device. The data allocation device is operatively connected to the first data port, the second data port, and the data storage portion. The data allocation device is adapted to allocate a portion of memory within the remote memory device for use by the electronic appliance and route data between the first data port, the second data port, and the data storage portion.

WO 00/48384 discloses a method and structure for transmitting digital picture data between a digital camera having a modem and a remote device, either over the Internet or over one or more secure communications links. A digital camera is modified to include a modem or other communications element, firmware, and a user interface for communication between the user and the firmware of the digital camera.

US2003/0183691 discloses a smart card reader comprising a card reader part for receiving a detachable smart card connected to it and for communicating information between the smart card reader and the smart card. In addition, the smart card reader comprises a short-range communications part connected to said card reader part for communicating information using a RF wireless method between the smart card reader and a wireless communications terminal external to it. The short-range communications part comprising a processing unit (MCU) for controlling the short-range communications part. The processing unit (MCU) contained in the short-range communications part is arranged to control the operations of the card reader part in addition to the operations of the short-range communications part.

### SUMMARY

It is not uncommon for two or more wireless-enabled devices to spend most of their time in close proximity to one another. For example, a person may routinely carry a personal digital assistant (PDA) and a portable digital audio/video player, or a cellphone and a PDA, or a smartphone and a gaming device. When it is desirable to increase the memory storage capacity of a first such device, it may be possible to use memory on one or more of the other devices to temporarily store data from the first device.

Data storage of a wireless portable electronic device is managed by securely transmitting a data item or portion thereof currently stored in a memory of the device over a direct wireless communication link to a smart card reader that is within range of the wireless portable electronic device; writing in the memory information used to retrieve the data item or portion thereof from the smart card reader; and erasing from the memory the data item or portion thereof that was transmitted to the smart card reader. After securely retrieving the data item or portion thereof from the other device over the wireless communication link, the retrieved data item or portion thereof may be stored in a cache and/or in the memory.

The other device may send information about its unused storage capacity and this information may be used to determine which data items stored in the memory to transmit to the other device.

A set of rules may be applied to determine which data items currently stored in the memory are candidates for transmission to the other device. The set of rules may be applied automatically without requiring user input or intervention.

Applying the rules may result in the selection, for example, of one or more of the following data items: messages that are older than a predetermined threshold age; messages whose last access by a user occurred prior to a predetermined cut-off date; attachments to messages; attachments to messages larger than a predetermined threshold size; calendar appointments that are older than a predetermined threshold age; calendar appointments that occurred in the past; calendar appointments that occur in the future after a pre-determined date; and notes to calendar appointments.

The portable device comprises a processor; a memory coupled to the processor, the memory arranged to store applications to be executed by the processor and data items for use by the applications; and a wireless communication interface coupled to the processor through which the device is able to communicate securely and authentically directly with a smart card reader when the smart card reader and the device are within range of each other, wherein the device is able to securely transmit a data item or portion thereof via the secure communications directly to the smart card reader for temporary storage therein, is arranged to write in the memory information to be used to retrieve the data item or portion thereof from the smart card reader, and is arranged to erase the data item or portion thereof from the memory.

The device may be part of a system also including at least the smart card reader wherein the wireless portable electronic device and the smart card reader are able to conduct secure and authentic wireless communications directly therebetween when within range of each other.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a block diagram of an exemplary communications system, according to some embodiments;

Figure 2 is a flowchart of an exemplary method for transferring data items or portions thereof to a wireless portable electronic device having unused storage capacity, according to some embodiments;

Figure 3 is a flowchart of an exemplary method for retrieving data items or portions thereof from the wireless portable electronic device, according to some embodiments; and

Figure 4 is a schematic illustration of an exemplary communications system, according to some embodiments.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

A person using a first wireless portable electronic device with limited memory resources may face a dilemma when the memory of the first device becomes too full. Should user data items be erased from the first device to make room for new data? Should additional memory for the first device be purchased? Should an external storage unit be purchased?

However, the person may also have in his or her possession a second wireless portable electronic device that is often within range of the first device. For example, it is not uncommon for a person to carry a personal digital assistant (PDA) and a portable digital audio/video player, or a cellphone and a PDA, or a smartphone and a gaming device. Some people even carry three or more wireless portable electronic devices. A non-exhaustive list of examples for the devices includes any of the following: personal digital assistants (PDAs), electronic organizers, handheld computers, cellular telephones, smart phones, gaming devices, digital audio players, digital video players, mobile managers, wireless smart card readers and the like.

The first device and the second device may be able to conduct secure wireless communications therebetween using cryptographic techniques and authentication algorithms. A non-exhaustive list of examples of wireless communication protocols with which the first device and the second device may be compatible includes Bluetooth® (BT), ZigBee^{™}, ultra wideband (UWB), wireless USB, IEEE 802.11, radio frequency identification (RFID) protocols, and proprietary communication protocols. The first device and the second device may each have an address by which it can be addressed in the wireless communication protocol. For example, if the devices are BT devices, the first device has a unique BT address and the second device has a unique BT address.

If the second device has unused storage capacity, then data items or portions thereof from the first device may be transmitted via the secure wireless communications to the second device for storage therein. The first device will replace the data item or portion thereof with information that will be used to retrieve the data item or portion thereof from the second device when desired. Since the information occupies less memory than the data item or portion thereof itself, the unused storage capacity of the memory of the first device is increased. Although this description focuses on a first device and a second device, there may be in fact more than one "second device" to which data items are transmitted from the first device for storage therein. A centralized book-keeping application may be used to keep track of where all of the externally stored data items have been moved to. This provides a method for sorting data items by device. In the case where the user wishes to make one of the second devices obsolete, all of the data items stored on that device may be retrieved to the first device and/or re-stored in other locations.

The transfer of data items from the first device to the second device may be initiated by the user of the devices, or may occur automatically when the unused storage capacity of the first device's memory decreases below a threshold, or may occur automatically because a rule applies.

Rules may be applied automatically by the first device in order to determine which data items are transferred to the second device, and in order to determine when, if at all, to transfer the data items back to the first device. The rules may also be applied even if the unused storage capacity of the first device's memory is above the threshold, as a preventative measure. A non-exhaustive list of examples for such rules is given below.

The data items transmitted from the first device to the second device for storage therein could be user data items and/or large system data items that are used infrequently by the first device.

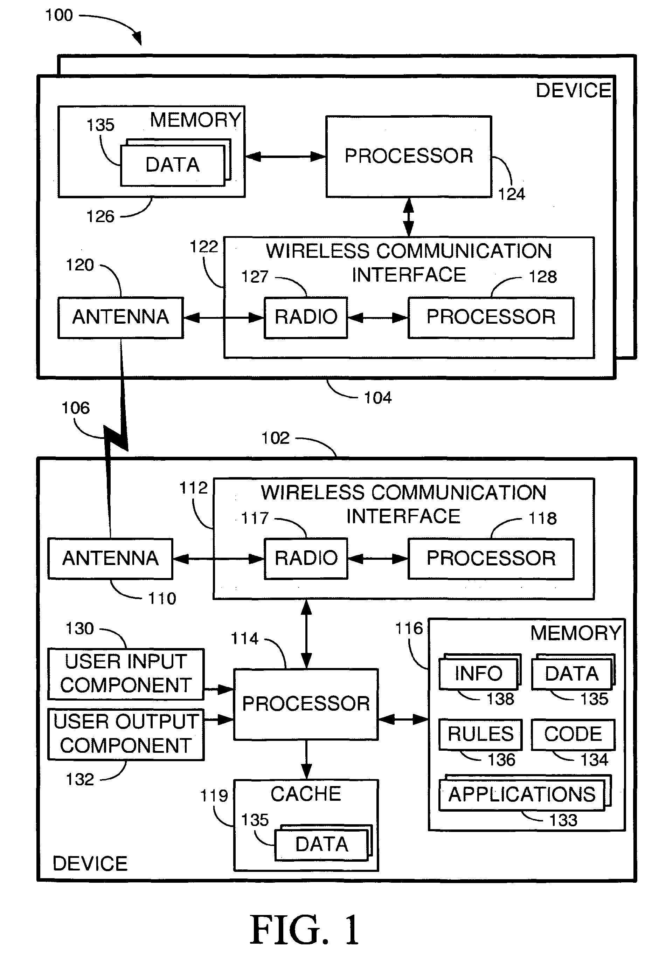

Figure 1 is a block diagram of an exemplary communications system 100, according to some embodiments. System 100 comprises a first wireless portable electronic device 102 and at least one second wireless portable electronic device 104.

When within range of each other, devices 102 and 104 are able to communicate securely over a wireless communication link 106 using cryptographic techniques.

Device 102 comprises an antenna 110, a wireless communication interface 112, a processor 114 coupled to wireless communication interface 112, and a memory 116 coupled to processor 114. Memory 116 may be fixed in or removable from device 102. Memory 116 may be embedded or partially embedded in processor 114. Processor 114 and memory 116 may be part of the same integrated circuit or in separate integrated circuits. Wireless communication interface 112, compatible with a short-range wireless communication protocol, comprises a radio 117 coupled to antenna 110, and a processor 118 coupled to radio 117. Radio 117 may be a software-defined radio. Wireless communication interface 112 and processor 114 may be part of the same integrated circuit or in separate integrated circuits. Device 102 also comprises a cache 119 coupled to processor 114. Cache 119 may be internal or external to processor 114.

Similarly, device 104 comprises an antenna 120, a wireless communication interface 122, a processor 124 coupled to wireless communication interface 122, and a memory 126 coupled to processor 124. Memory 126 may be fixed in or removable from device 104. Memory 126 may be embedded or partially embedded in processor 124. Processor 124 and memory 126 may be part of the same integrated circuit or in separate integrated circuits. Wireless communication interface 122, compatible with the same short-range wireless communication protocol as wireless communication interface 112, comprises a radio 127 coupled to antenna 120, and a processor 128 coupled to radio 127. Radio 127 may be a software-defined radio. Wireless communication interface 122 and processor 124 may be part of the same integrated circuit or in separate integrated circuits.

A non-exhaustive list of examples for antennae 110 and 120 includes dipole antennae, monopole antennae, multilayer ceramic antennae, planar inverted-F antennae, loop antennae, shot antennae, dual antennae, omnidirectional antennae and any other suitable antennae.

A non-exhaustive list of examples for processors 114, 118, 124 and 128 includes a central processing unit (CPU), a digital signal processor (DSP), a reduced instruction set computer (RISC) and a complex instruction set computer (CISC). Furthermore, processors 114, 118, 124 and 128 may be part of application specific integrated circuits (ASICs) or may be a part of application specific standard products (ASSPs).

A non-exhaustive list of examples for memories 116 and 126 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM) and universal serial bus (USB) removable memory;
b) optical devices, such as compact disk read only memory (CD ROM); and
c) magnetic devices, such as a hard disk, a floppy disk and a magnetic tape.

Device 102 may comprise a user input component 130 and a user output component 132, both coupled to processor 114. A non-exhaustive list of examples for user input component 130 includes a keyboard, a microphone, a thumbwheel, a trackball, a joystick and a touch sensitive display. A non-exhaustive list of examples for user output component 132 includes a display and a speaker.

Memory 116 may store applications 133 and code 134 to be executed by processor 114, rules 136 to be implemented by code 134, information 138 about data items or portions thereof that have been stored in device 104, and data items 135.

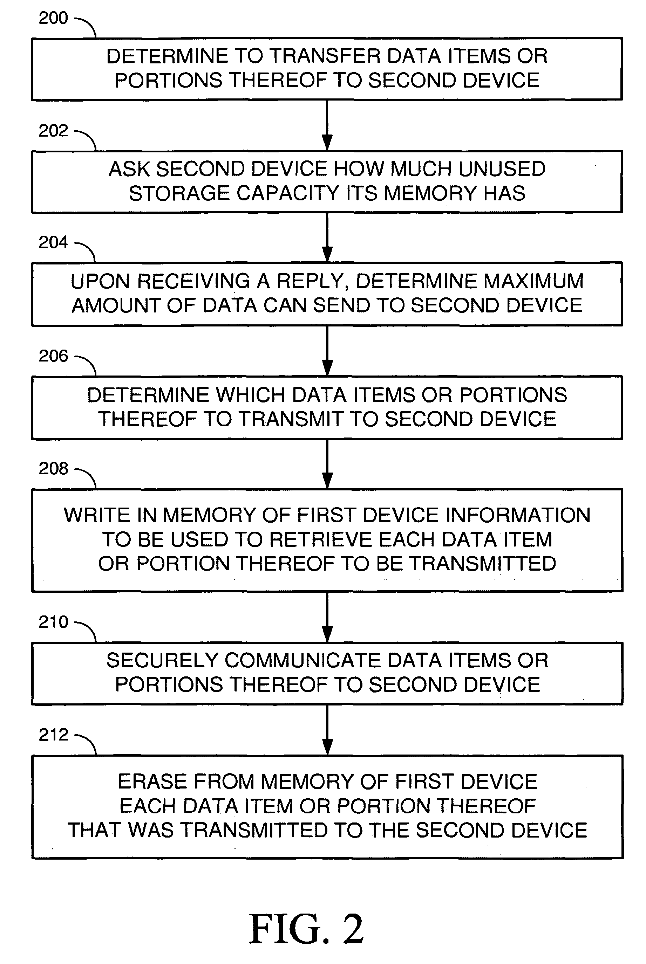

Figure 2 is a flowchart of an exemplary method for transferring data items or portions thereof to a wireless portable electronic device having unused storage capacity, according to some embodiments. Code 134 stored in memory 116 may implement the method of Figure 2 in device 102. The method of Figure 2 may occur in the background. Alternatively, the user of device 102 may be prompted for permission to perform the method of Figure 2. Alternatively, the user of device 102 may initiate performance of the method of Figure 2.

At 200, device 102 determines to transfer at least one data item 135 or portion thereof to another device. This determination may be initiated by the user of device 102, or may occur automatically when the unused storage capacity of memory 116 decreases below a threshold, or may occur automatically because one or more of rules 136 apply.

At 202, device 102 asks device 104 how much unused storage capacity is in memory 126. At 204, upon receiving the storage capacity information from device 104, device 102 determines the maximum amount of data it can send to device 104 for storage in memory 126. The request and reply may be sent over wireless communication link 106, possibly securely. Alternatively, device 104 could send its unused storage capacity information to device 102 periodically or upon connection with device 102 over the wireless communication link 106.

At 206, device 102 determines which data items 135 or portions thereof that are currently stored in memory 116 to transmit to device 104. For example, rules 136 stored in memory 116 may be applied automatically by code 134 in order to determine which data items 135 or portions thereof to transmit to device 104. A non-exhaustive list of examples for such rules is given below.

At 208, device 102 writes information 138 in memory 116. Information 138 is to be used in the future to retrieve from device 104 each data item 135 or portion thereof to be transmitted. Information 138 may include, for example, an address or other indication of device 104. For example, the address may be the media access control address of device 104 or the unique BT address of device 104, if device 104 is a BT device. Information 138 may include, for example, a short summary of data item 135 or portion thereof. Information 138, or a portion thereof, may be stored using a centralized book-keeping application in order to keep track of where all of the externally stored data items have been moved to.

At 210, device 102 securely transmits data items 135 or portions thereof, as determined at 206, to device 104 over wireless communication link 106 using cryptographic techniques and authentication algorithms. Upon receipt, device 104 stores data items 135 or portions thereof in memory 126. Devices 102 and 104 may have similar file systems and store data items 135 or portions thereof in the same way. Alternatively, device 102 and 104 may have different file systems and store data items 135 or portions thereof in different ways. Since data items 135 or portions thereof are serialized prior to transmission over link 106, the file systems of device 102 and device 104 need not be the same or similar.

At 212, once device 102 has received confirmation from device 104 that data items 135 or portions thereof were successfully received, device 102 erases from memory 116 the data items 135 or portions thereof that were transmitted to device 104.

Instead of asking device 104 how much unused storage capacity it has in memory 126, device 102 may begin the method of Figure 2 at 206 and risk that device 104 will refuse to store all or some of the data items 135 or portions thereof that are transmitted at 210. In this embodiment, device 102 only erases the data items 135 for which it receives a confirmation of successful receipt from device 104. In this manner, the data items 135 that device 104 refuses to store will not be inadvertently erased from device 102.

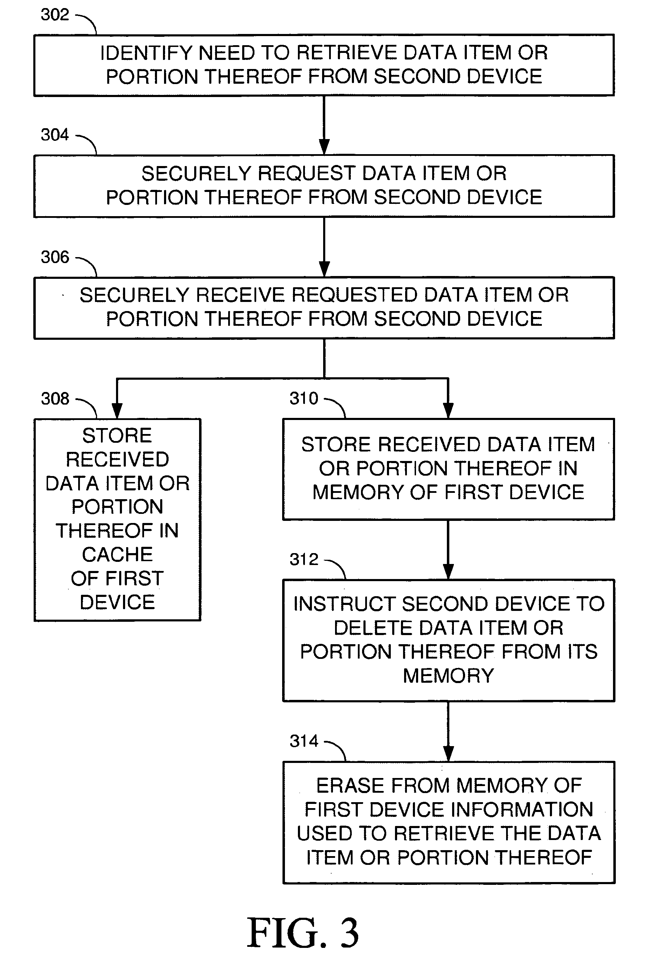

Figure 3 is a flowchart of an exemplary method for retrieving data items or portions thereof from the wireless portable electronic device, according to some embodiments. Code 134 stored in memory 116 may implement the method of Figure 3 in device 102.

At 302, device 102 identifies a need to retrieve a particular data item 135 or portion thereof from device 104. For example, this need may be identified from user input received via user input component 130. In another example, user data items of applications 133 of device 102 may be synchronized with one or more applications on another device, for example, a personal computer (not shown). If a particular user data item or a portion thereof is stored on device 104, and the synchronization application requests that particular user data item or portion thereof, then device 102 will identify a need to retrieve the particular user data item or portion thereof from device 104.

At 304, device 102 securely requests the particular data item 135 or portion thereof from device 104 over wireless communication link 106. The request is based, at least in part, on the information 138 related to the particular data item 135 or portion thereof. If no wireless communication link is established with device 104, or if the link is lost, for example, in the case where device 104 is out of the wireless communication range of device 102, the operation of retrieving the data item fails, and an error message may be displayed on device 102.

At 306, device 102 securely receives the particular data item 135 or portion thereof from device 104 over wireless communication link 106.

At 308, device 102 may store the particular data item 135 or portion thereof in cache 119. Applications 133 on device 102 may access the particular data item 135 or portion thereof until it is overwritten in cache 119. Memory 116 retains information 138 related to the particular data item 135 or portion thereof and memory 126 retains its copy of the particular data item 135 or portion thereof.

Alternatively, device 102 may store at 310 the particular data item 135 or portion thereof in memory 116, instruct device 104 at 312 to delete its copy of the particular data item 135 or portion thereof in memory 126, and at 314, erase from memory 116 information 138 related to the particular data item 135 or portion thereof.

The following is a non-exhaustive list of examples for rules that affect which data items or portions thereof are to be transmitted from the first device to the second device, and that affect when the first device identifies a need to retrieve a particular data item or portion thereof.

### Rules for Messages

If the first device has at least one messaging application to handle e-mail messages, instant messages, peer-to-peer messages, and the like, then any or a combination of the following rules, presented below in no particular order, may apply.

(1) The first device may automatically store old messages on the second device. This may take effect periodically, or when a memory manager of the first device requires more memory. The received time, sender and subject may be retained on the first device, so that the user is able to identify the message in a list of messages on the first device, and the body of the message may be stored on the second device. When the user attempts to access the message on the first device, for example, by opening the message to view it or by searching for the message, the body of the message may be retrieved from the second device.

(2) The first device may retain a first portion of a message body, for example, of a predetermined size such as 2Kb, and may store the remaining portion of the message body on the second device. The user may view the first portion of the message body on the first device, but as the user scrolls down past the first portion, the remaining portion or a next portion of the message will have to be retrieved from the second device in order for the user to view it. The first device will have stored information in its memory to enable the first device to retrieve the next portion or the remaining portion from the second device. The message displayed to the user, for example, via user output component 132, may have an indication that there are additional portions of the message body. The messaging application may automatically retrieve the next portion or the remaining portion from the second device when the user scrolls to the indication. Alternatively, the messaging application may wait for the user to provide input, for example, via user input component 130, that the user wants to have the next portion or the remaining portion of the message body retrieved from the second device.

(3) Messages may be marked with a timestamp indicating the time at which the message was last accessed by the user of the first device. Messages with a timestamp older than a predefined duration, for example, 30 days, may be automatically transmitted to the second device for storage therein.

(4) Message attachments may be automatically stored on the second device, rather than on the first device, and retrieved only when required, for example, when a message is being forwarded to another recipient. A threshold attachment size may be specified, wherein attachments larger than a threshold size may be automatically stored on the second device, and smaller attachments remain on the first device.

### Rules for Calendar Appointments

If the first device has a calendar application, then any or a combination of the following rules, presented below in no particular order, may apply. Calendar appointments include calendar meetings.

(1) Calendar appointments for dates prior to a cut-off date may be automatically stored on the second device, since they are unlikely to be accessed frequently by the user. The cut-off date might be the current date, for example, such that all calendar appointments from past dates may be automatically stored.

(2) Calendar appointments for dates that are more than a predetermined time in the future, for example, more than 30 days, may be automatically stored on the second device. As the date of the calendar appointment approaches and is less than the predetermined time in the future, the calendar appointment may be automatically retrieved from the second device and stored solely on the first device.

(3) Notes of calendar appointments may be automatically stored on the second device, and retrieved from the second device only when the user attempts to access them.

### Rules for other user data items

Similar rules may be applied to user data items of other types.

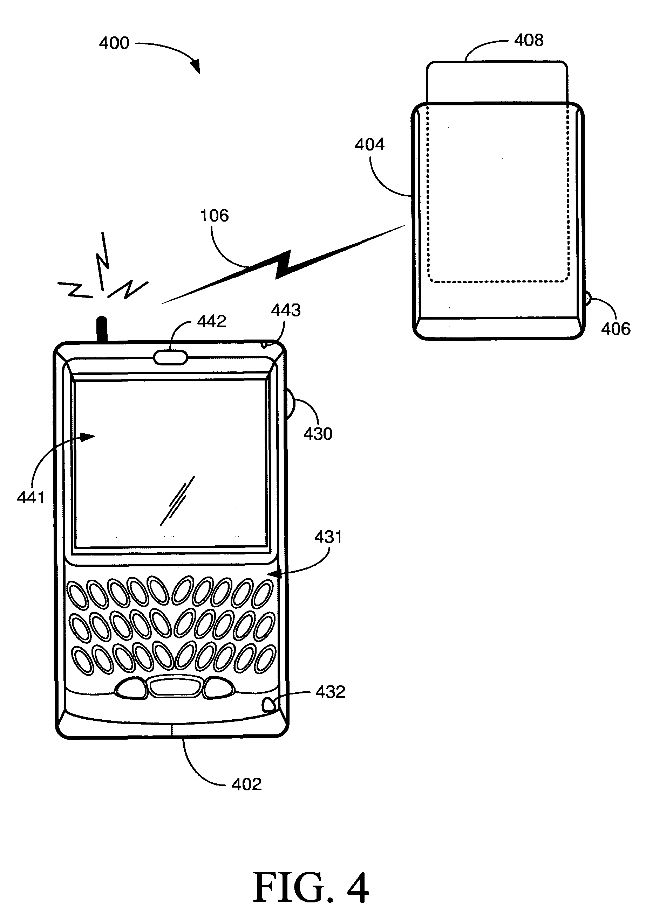

Figure 4 is an illustration of an exemplary communication system 400, according to some embodiments. System 400 is similar to system 100 of Figure 1, where device 102 is a mobile device 402, and device 104 is a wireless smart card reader 404. Mobile device 402 and smart card reader 404 are able to communicate securely over wireless communication link 106. In the example shown in Figure 4, wireless smart card reader 404 has a user input component that is an electro-mechanical device 406, however, other and/or additional user input components are possible. Similarly, in the example shown in Figure 4, mobile device 402 has user input components 130 that include a thumbwheel 430, a keyboard 431 and a microphone 432, and user output components 132 that include a display 441, a speaker 442, and a light emitting diode (LED) 443.

A smart card 408 is shown inserted into smart card reader 404. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with security information (e.g., a private decryption key, a private signing key, biometrics, etc.) and may include a processor and/or dedicated logic, for example, dedicated decryption logic and/or dedicated signing logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 408 may use smart card reader 404 for identification, to unlock mobile device 402, and to digitally sign and/or decrypt messages sent by mobile device 402. Smart card 408 may also include a random number generator.

For example, mobile device 402 may be able to send and receive e-mail messages via an e-mail server (not shown). If, for example, the Secure Multipurpose Internet Mail Extensions (S/MIME) protocol is used, e-mail messages received at mobile device 402 are encrypted using a symmetric algorithm with a random session key generated by the sender of the e-mail message. The e-mail message also includes the session key, encrypted using the public key of the recipient. Upon receipt of an encrypted e-mail message, mobile device 402 may extract the encrypted session key and send it to smart card reader 404 via communication link 106. Smart card reader 404 may send the encrypted session key to smart card 408, and the decryption engine of smart card 408 may decrypt the encrypted session key using the recipient's private decryption key, which is stored in smart card 408. Smart card reader 404 may retrieve the decrypted session key from smart card 408 and forward it to mobile device 402 via communication link 106 so that mobile device 402 can decrypt the received e-mail message. The smart card 408 may prevent unauthorized use of the recipient's private decryption key by requiring that a password or personal identification number (PIN) be supplied before allowing the decryption operation to proceed.

Similarly, to add a digital signature to an e-mail message being sent by mobile device 402, mobile device 402 may send a hash of the contents of the e-mail message to smart card reader 404 over communication link 106. Smart card reader 404 may pass the hash to smart card 408, which may produce a digital signature from the hash and the sender's private signing key, which is stored in smart card 408. Smart card 408 may then pass the digital signature to smart card reader 404, which may forward it to mobile device 402 via communication link 106 so that mobile device 402 can transmit it along with the e-mail message to the e-mail server. Again, smart card 408 may prevent unauthorized use of the recipient's private signing key by requiring that a password or PIN be supplied before allowing the signing operation to proceed.

The unencrypted message key should be sent securely over communication link 106 from smart card reader 404 to mobile device 402 to prevent a third party from retrieving the message key from communication link 106. Similarly, the hash to be signed should be sent authentically over communication link 106 from smart card reader 404 to mobile device 402 to prevent a third party from modifying the hash and thereby causing smart card 408 to produce a signature using a hash different from the hash of the intended message. Therefore communication link 106 may need to be secured using cryptographic techniques.

To secure communication link 106, smart card reader 404 may need to generate various cryptographic keys. For example, if smart card reader 404 and mobile device 102 are BT devices, then a relatively short (up to 16-digits) key may be used for a *Pairing* procedure. An additional layer of security for communication link 106 may involve encryption with one or more additional keys. These additional keys may be generated from a shared secret between smart card reader 404 and mobile device 402, and one or more symmetric keys based on this shared secret may be generated using known Diffie-Hellman and simple password exponential key exchange (SPEKE) methods and variants thereof. Moreover, random session keys may be generated for each individual communication session over communication link 106.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method to manage data storage of a wireless portable electronic device (102), the method comprising:
applying a set of rules to determine which data items (135) currently stored in memory (116) of the device (102) are candidates for transmission to a smart card reader (404) that is within range of the wireless portable electronic device (102);
securely transmitting a data item (135) or portion thereof currently stored in the memory (116) over a direct wireless communication link to the smart card reader (404) for storage in a memory (126) of the smart card reader (404);
receiving from the smart card reader (404) confirmation of successful receipt and of successful storage of the data item (135) or portion thereof;
writing in the memory (116) information used to retrieve the data item (135) or portion thereof from the smart card reader (404); and
in response to receiving the confirmation, erasing from the memory (116) the data item (135) or portion thereof that was transmitted to the smart card reader (404), wherein applying the set of rules comprises:
identifying messages that are older than a predetermined threshold age, and/or
identifying messages whose last access by a user occurred prior to a predetermined cut-off date, and/or
identifying attachments to messages, and/or
identifying attachments to messages larger than a predetermined threshold size, and/or
identifying calendar appointments that are older than a predetermined threshold age, and/or
identifying calendar appointments that occurred in the past, and/or
identifying calendar appointments that occur in the future after a pre-determined date, and/or
identifying notes to calendar appointments.

2. The method of claim 1, further comprising:
using the information to securely retrieve the data item (135) or portion thereof from the smart card reader (404) over the wireless communication link.

3. The method of claim 2, further comprising:
storing the retrieved data item (135) or portion thereof in a cache (119) and/or in the memory (116).

4. The method of any one of claims 1 to 3, further comprising:
receiving information from the smart card reader (404) about its unused storage capacity; and
determining, based at least in part upon the unused storage capacity, which data items (135) stored in the memory (116) to transmit to the smart card reader (404).

5. The method of any one of claims 1 to 4, wherein applying the set of rules includes applying the set of rules automatically without requiring user input or intervention.

6. A computer-readable medium having computer-executable instructions for performing the method of any one of claims 1 to 5.

7. A portable electronic device (102), comprising:
a processor (114);
a wireless communication interface (112) coupled to the processor (114) through which the device (102) is able to communicate securely and authentically directly with a smart card reader (404) when the smart card reader (404) and the device (102) are within range of each other; and
a memory (116) coupled to the processor (114), the memory (116) arranged to store applications (133) that are executable by the processor (114) and arranged to store data items (135) for use by the applications (133),
the memory (116) further arranged to store executable code means (134) which, when executed by the processor (114), is arranged to determine which of the data items (135) or portions thereof to transmit to the smart card reader (404) by applying a set of rules,
wherein the device (102) is able to securely transmit a data item (135) or portion thereof via the secure communications directly to the smart card reader (404) for temporary storage in a memory (126) of the smart card reader (404), is arranged to write in the memory (116) information for retrieving the data item (135) or portion thereof from the smart card reader (404), and, in response to receiving via the wireless communication interface (112) confirmation from the smart card reader (404) of successful receipt and of successful storage of the data item (135) or portion thereof, is arranged to erase the data item (135) or portion thereof from the memory (116), wherein applying the set of rules results in the identification of:
messages that are older than a predetermined threshold age, and/or
messages whose last access by a user occurred prior to a predetermined cut-off date, and/or
attachments to messages, and/or
attachments to messages larger than a predetermined threshold size, and/or
calendar appointments that are older than a predetermined threshold age, and/or
calendar appointments that occurred in the past, and/or
calendar appointments that occur in the future after a pre-determined date, and/or
notes to calendar appointments.

8. The portable electronic device (102) of claim 7, wherein the executable code means (134), when executed by the processor (114), is further arranged to apply the set of rules automatically without requiring user input or intervention.

9. A system comprising:
at least a wireless portable electronic device (102) as in claim 7 or claim 8, and
at least the smart card reader (404),
wherein the wireless portable electronic device (102) and the smart card reader (404) are able to conduct secure and authentic wireless communications directly therebetween when within range of each other.

10. The system of claim 9, wherein the wireless portable electronic device (102) is a mobile device (402) that is able to send and receive e-mail messages.

## Patentansprüche

1. Ein Verfahren zur Verwaltung einer Datenspeicherung einer drahtlosen tragbaren elektronischen Vorrichtung (102), wobei das Verfahren aufweist:
Anwenden eines Satzes von Regeln, um zu bestimmen, welche Datenelemente (135), die aktuell in einem Speicher (116) der Vorrichtung (102) gespeichert sind, Kandidaten für eine Übertragung an einen Smartcard-Leser (404) sind, der sich in Reichweite der drahtlosen tragbaren elektronischen Vorrichtung (102) befindet;
sicheres Übertragen eines Datenelements (135) oder eines Teils davon, das/der aktuell in dem Speicher (116) gespeichert ist, über eine direkte drahtlose Kommunikationsverbindung an den Smartcard-Leser (404) zum Speichern in einem Speicher (126) des Smartcard-Lesers (404);
Empfangen von dem Smartcard-Leser (404) einer Bestätigung eines erfolgreichen Empfangs und eines erfolgreichen Speicherns des Datenelements (135) oder eines Teils davon;
Schreiben von Information in den Speicher (116), die verwendet wird, um das Datenelement (135) oder einen Teil davon von dem Smartcard-Leser (404) abzurufen; und
in Reaktion auf das Empfangen der Bestätigung, Löschen aus dem Speicher (116) des Datenelements (135) oder eines Teils davon, das/der an den Smartcard-Leser (404) übertragen wurde,
wobei das Anwenden des Satzes von Regeln aufweist:
Identifizieren von Nachrichten, die älter sind als ein vorgegebenes Schwellenalter, und/oder
Identifizieren von Nachrichten, deren letzter Zugriff durch einen Benutzer vor einem vorgegebenen Trennungsdatum stattgefunden hat, und/oder
Identifizieren von Anhängen zu Nachrichten, und/oder Identifizieren von Anhängen zu Nachrichten, die größer sind als eine vorgegebene Schwellengröße, und/oder
Identifizieren von Kalenderterminen, die älter sind als ein vorgegebenes Schwellenalter, und/oder
Identifizieren von Kalenderterminen, die in der Vergangenheit stattgefunden haben, und/oder
Identifizieren von Kalenderterminen, die in der Zukunft nach einem vorgegebenen Datum stattfinden, und/oder
Identifizieren von Anmerkungen zu Kalenderterminen.

2. Das Verfahren gemäß Anspruch 1, das weiter aufweist:
Verwenden der Information, um das Datenelement (135) oder einen Teil davon aus dem Smartcard-Leser (404) über die drahtlose Kommunikationsverbindung abzurufen.

3. Das Verfahren gemäß Anspruch 2, das weiter aufweist:
Speichern des abgerufenen Datenelements (135) oder eines Teils davon in einem Cachespeicher (119) und/oder in dem Speicher (116).

4. Das Verfahren gemäß einem der Ansprüche 1 bis 3, das weiter aufweist:
Empfangen, von dem Smartcard-Leser (404), von Information über seine ungenutzte Speicherkapazität; und
Bestimmen, basierend zumindest teilweise auf der ungenutzten Speicherkapazität, welche Datenelemente (135), die in dem Speicher (116) gespeichert sind, an den Smartcard-Leser (404) zu übertragen sind.

5. Das Verfahren gemäß einem der Ansprüche 1 bis 4, wobei das Anwenden des Satzes von Regeln ein automatisches Anwenden des Satzes von Regeln aufweist, ohne eine Benutzereingabe oder Intervention zu erfordern.

6. Ein computerlesbares Medium mit computerausführbaren Anweisungen zur Durchführung des Verfahrens gemäß einem der Ansprüche 1 bis 5.

7. Eine tragbare elektronische Vorrichtung (102), die aufweist:
einen Prozessor (114),
eine drahtlose Kommunikationsschnittstelle (112), die mit dem Prozessor (114) gekoppelt ist, durch die die Vorrichtung (102) sicher und authentisch direkt mit einem Smartcard-Leser (404) kommunizieren kann, wenn der Smartcard-Leser (404) und die Vorrichtung (102) in Reichweite zueinander sind; und
einen Speicher (116), der mit dem Prozessor (114) gekoppelt ist, wobei der Speicher (116) ausgebildet ist, Anwendungen (133) zu speichern, die durch den Prozessor (114) ausführbar sind, und ausgebildet ist, Datenelemente (135) zur Verwendung durch die Anwendungen (133) zu speichern,
wobei der Speicher (116) weiter ausgebildet ist, ein ausführbares Codemittel (134) zu speichern, das bei Ausführung durch den Prozessor (114) ausgebildet ist, zu bestimmen, welche der Datenelemente (135) oder Teile davon an den Smartcard-Leser (404) zu übertragen sind, durch Anwenden eines Satzes von Regeln,
wobei die Vorrichtung (102) ein Datenelement (135) oder einen Teil davon über die sichere Kommunikation direkt an den Smartcard-Leser (404) sicher übertragen kann zum temporären Speichern in einem Speicher (126) des Smartcard-Lesers (404), ausgebildet ist zum Schreiben, in den Speicher (116), von Information zum Abrufen des Datenelements (135) oder eines Teils davon von dem Smartcard-Leser (404), und, in Reaktion auf das Empfangen, über die drahtlose Kommunikationsschnittstelle (112), einer Bestätigung von dem Smartcard-Leser (404) über einen erfolgreichen Empfang und ein erfolgreiches Speichern des Datenelements (135) oder eines Teils davon, ausgebildet ist zum Löschen des Datenelements (135) oder eines Teils davon aus dem Speicher (116),
wobei das Anwenden des Satzes von Regeln zu der Identifikation führt von: Nachrichten, die älter sind als ein vorgegebenes Schwellenalter, und/oder
Nachrichten, deren letzter Zugriff durch einen Benutzer vor einem vorgegebenen Trennungsdatum stattgefunden hat, und/oder Anhängen zu Nachrichten, und/oder
Anhängen zu Nachrichten, die größer sind als eine vorgegebene Schwellengröße, und/oder
Kalenderterminen, die älter sind als ein vorgegebenes Schwellenalter, und/oder
Kalenderterminen, die in der Vergangenheit stattgefunden haben, und/oder
Kalenderterminen, die in der Zukunft nach einem vorgegebenen Datum stattfinden, und/oder
Anmerkungen zu Kalenderterminen.

8. Die tragbare elektronische Vorrichtung (102) gemäß Anspruch 7, wobei das ausführbare Codemittel (134), bei Ausführung durch den Prozessor (114), weiter ausgebildet ist zum automatischen Anwenden des Satzes von Regeln, ohne eine Benutzereingabe oder Intervention zu erfordern.

9. Ein System, das aufweist:
zumindest eine drahtlose tragbare elektronische Vorrichtung (102) gemäß Anspruch 7 oder Anspruch 8, und
zumindest den Smartcard-Leser (404),
wobei die drahtlose tragbare elektronische Vorrichtung (102) und der Smartcard-Leser (404) sichere und authentische drahtlose Kommunikationen direkt zwischen ihnen führen können, wenn in Reichweite zueinander.

10. Das System gemäß Anspruch 9, wobei die drahtlose tragbare elektronische Vorrichtung (102) eine mobile Vorrichtung (402) ist, die Email-Nachrichten senden und empfangen kann.

## Revendications

1. Procédé pour gérer le stockage de données d'un dispositif électronique portable sans fil (102), le procédé comprenant :
l'application d'un ensemble de règles pour déterminer quels éléments de données (135) actuellement stockés dans une mémoire (116) du dispositif (102) sont candidats pour la transmission à un lecteur de carte à puce (404) qui est à portée du dispositif électronique portable sans fil (102) ;
la transmission sécurisée d'un élément de données (135) ou d'une partie de celui-ci stocké actuellement dans la mémoire (116) sur une liaison de communication sans fil directe au lecteur de carte à puce (404) pour le stockage dans une mémoire (126) du lecteur de carte à puce (404) ;
la réception en provenance du lecteur de carte à puce (404) d'une confirmation de réception réussie et de stockage réussi de l'élément de données (135) ou de la partie de celui-ci ;
l'écriture dans la mémoire (116) d'informations utilisées pour récupérer l'élément de données (135) ou la partie de celui-ci à partir du lecteur de carte à puce (404) ; et
en réponse à la réception de la confirmation, l'effacement de la mémoire (116) de l'élément de données (135) ou de la partie de celui-ci qui a été transmis au lecteur de carte à puce (404),
dans lequel l'application de l'ensemble de règles comprend :
l'identification de messages qui sont plus anciens qu'un âge seuil prédéterminé, et/ou
l'identification de messages dont le dernier accès par un utilisateur s'est produit avant une date limite prédéterminée, et/ou
l'identification de pièces jointes à des messages, et/ou
l'identification de pièces jointes à des messages supérieures à une taille seuil prédéterminée, et/ou
l'identification de rendez-vous d'agenda qui sont plus anciens qu'un âge seuil prédéterminé, et/ou
l'identification de rendez-vous d'agenda qui se sont produits dans le passé, et/ou
l'identification de rendez-vous d'agenda qui se produiront dans le futur après une date prédéterminée, et/ou
l'identification de notes sur des rendez-vous d'agenda.

2. Procédé selon la revendication 1, comprenant en outre :
l'utilisation des informations pour récupérer de façon sécurisée l'élément de données (135) ou la partie de celui-ci à partir du lecteur de carte à puce (404) sur la liaison de communication sans fil.

3. Procédé selon la revendication 2, comprenant en outre :
le stockage de l'élément de données (135) ou de la partie de celui-ci récupéré dans une antémémoire (119) et/ou dans la mémoire (116).

4. Procédé selon l'une quelconque des revendications 1 à 3, comprenant en outre :
la réception d'informations en provenance du lecteur de carte à puce (404) concernant sa capacité de stockage inutilisée ; et
la détermination, sur la base au moins en partie de la capacité de stockage inutilisée, de quels éléments de données (135) stockés dans la mémoire (116) sont à transmettre au lecteur de carte à puce (404).

5. Procédé selon l'une quelconque des revendications 1 à 4, dans lequel l'application de l'ensemble de règles comprend l'application de l'ensemble de règles automatiquement sans requérir d'entrée ni d'intervention de l'utilisateur.

6. Support lisible par ordinateur ayant des instructions exécutables par ordinateur pour effectuer le procédé selon l'une quelconque des revendications 1 à 5.

7. Dispositif électronique portable (102), comprenant :
un processeur (114) ;
une interface de communication sans fil (112) couplée au processeur (114) par l'intermédiaire de laquelle le dispositif (102) est en mesure de communiquer de façon sécurisée et authentique directement avec un lecteur de carte à puce (404) lorsque le lecteur de carte à puce (404) et le dispositif (102) sont à portée l'un de l'autre ; et
une mémoire (116) couplée au processeur (114), la mémoire (116) étant conçue pour stocker des applications (133) qui sont exécutables par le processeur (114) et conçue pour stocker des éléments de données (135) destinés à être utilisés par les applications (133),
la mémoire (116) étant en outre conçue pour stocker un moyen de code exécutable (134) qui, lorsqu'il est exécuté par le processeur (114), est conçu pour déterminer lesquels des éléments de données (135) ou des parties de ceux-ci sont à transmettre au lecteur de carte à puce (404) en appliquant un ensemble de règles,
le dispositif (102) étant en mesure de transmettre de façon sécurisée un élément de données (135) ou une partie de celui-ci via les communications sécurisées directement au lecteur de carte à puce (404) pour le stockage temporaire dans une mémoire (126) du lecteur de carte à puce (404), étant conçu pour écrire des informations dans la mémoire (116) pour récupérer l'élément de données (135) ou la partie de celui-ci à partir du lecteur de carte à puce (404), et, en réponse à la réception via l'interface de communication sans fil (112) de la confirmation en provenance du lecteur de carte à puce (404) de la réception réussie ou du stockage réussi de l'élément de données (135) ou de la partie de celui-ci, étant conçu pour effacer l'élément de données (135) ou la partie de celui-ci de la mémoire (116),
dans lequel l'application de l'ensemble de règles entraîne l'identification de :
messages qui sont plus anciens qu'un âge seuil prédéterminé, et/ou
messages dont le dernier accès par un utilisateur s'est produit avant une date limite prédéterminée, et/ou
pièces jointes à des messages, et/ou
pièces jointes à des messages supérieures à une taille seuil prédéterminée, et/ou
rendez-vous d'agenda qui sont plus anciens qu'un âge seuil prédéterminé, et/ou
rendez-vous d'agenda qui se sont produits dans le passé, et/ou
rendez-vous d'agenda qui se produiront dans le futur après une date prédéterminée, et/ou
notes sur des rendez-vous d'agenda.

8. Dispositif électronique portable (102) selon la revendication 7, dans lequel le moyen de code exécutable (134), lorsqu'il est exécuté par le processeur (114), est en outre conçu pour appliquer l'ensemble de règles automatiquement sans requérir d'entrée ni d'intervention de l'utilisateur.

9. Système comprenant :
au moins un dispositif électronique portable sans fil (102) selon la revendication 7 ou la revendication 8, et
au moins le lecteur de carte à puce (404),
dans lequel le dispositif électronique portable sans fil (102) et le lecteur de carte à puce (404) sont en mesure de conduire des communications sans fil sécurisées et authentiques directement entre eux lorsqu'ils sont à portée l'un de l'autre.

10. Système selon la revendication 9, dans lequel le dispositif électronique portable sans fil (102) est un dispositif mobile (402) qui est en mesure d'envoyer et de recevoir des messages de courriel.
